Europäisches Patentamt

European Patent Office

Office européen des brevets

(19)

(11) Veröffentlichungsnummer : **0 099 596**
**B1**

# EUROPÄISCHE PATENTSCHRIFT

(12)

(45) Veröffentlichungstag der Patentschrift :
10.09.86

(21) Anmeldenummer : 83200810.6

(22) Anmeldetag : 03.06.83

(51) Int. Cl.⁴ : **H 02 M   3/335**, H 02 M   3/24,
H 04 B   3/44

(54) Stromversorgungsschaltung.

(30) Priorität : 05.06.82 DE 3221404

(43) Veröffentlichungstag der Anmeldung :
01.02.84 Patentblatt 84/05

(45) Bekanntmachung des Hinweises auf die Patenterteilung : 10.09.86 Patentblatt 86/37

(84) Benannte Vertragsstaaten :
DE FR GB IT SE

(56) Entgegenhaltungen :
DE-A- 2 355 014
DE-A- 2 809 138
Patent Abstracts of Japan, Band 6, N4. 140, 29. Juli
1982

(73) Patentinhaber : Philips Kommunikations Industrie AG
Thurn-und-Taxis-Strasse 10
D-8500 Nürnberg 10 (DE)
DE
N.V. Philips' Gloeilampenfabrieken
Groenewoudseweg 1
NL-5621 BA Eindhoven (NL)
FR GB IT SE

(72) Erfinder : Weinfurtner, Günter
Max-Reger-Weg 38
D-8501 Wendelstein (DE)

(74) Vertreter : Peuckert, Hermann et al
Philips Patentverwaltung GmbH Billstrasse 80 Postfach 10 51 49
D-2000 Hamburg 28 (DE)

**Beschreibung**

Die Erfindung betrifft eine Stromversorgungsschaltung gemäß Oberbegriff des Anspruches 1.

In der Zeitschrift Elektronik, 1978, Heft 4, Seite 102 bis 107 sind verschiedene Stromversorgungsschaltungen beschrieben, die mit einem Gleichspannungswandler aufgebaut sind. Es gibt zwei Grundtypen von Gleichspannungswandlern : den Sperrwandler und den Durchflußwandler. Der Gegentaktwandler ist ein Sonderfall des Durchflußwandlers.

Bei allen Gleichspannungswandlern wird die Eingangsspannung mittels eines Schalttransistors zerhackt. Die so erhaltene Rechteckspannung wird mit Hilfe eines Transformators übersetzt und anschließend gleichgerichtet und gesiebt. Die gesiebte Ausgangsspannung des Gleichspannungswandlers wird dadurch stabilisiert, daß mit Hilfe einer Regelschaltung das Tastverhältnis der Rechteckspannung geregelt wird. Schwankungen der zu transformierenden Spannung oder des Lastwiderstandes, der mit der gesiebten Ausgangsspannung gespeist wird, bewirken deshalb eine Veränderung des Tastverhältnisses. Man spricht bei einer Regelung des Tastverhältnisses auch von Impulsbreitensteuerung.

In der Übertragungstechnik werden Stromversorgungsschaltungen, die über eine Leitung von einer Gleichspannungsquelle ferngespeist werden, in Endgeräten und Zwischenverstärkern verwendet. Eine derartige Fernspeisung mittels einer Gleichspannungsquelle als Fernspeisequelle ist bis zu einer Leitungslänge von etwa 2 km sinnvoll, weil die Spannungsverluste längs der Leitung dabei noch in einem erträglichen Maß bleiben. Wenn dagegen über eine größere Entfernung, bis z. B. 130 km, wie es in der TF-Technik oft der Fall ist, ferngespeist werden soll, so ersetzt man die Gleichspannungsquelle durch eine Gleichstromquelle, die einen konstanten Strom durch die Fernspeiseleitung zu dem oder den einzelnen Verbrauchern, z. B. Zwischenverstärkern, schickt. Wenn mehrere Verbraucher von derselben Fernspeisequelle versorgt werden, so sind alle Verbraucher bei Verwendung einer Gleichstromquelle in Reihe zur Stromquelle geschaltet, während sie bei Verwendung einer Gleichspannungsquelle parallel zur Spannungsquelle geschaltet sind. Damit die Spannungsverluste längs der Leitung gering bleiben, muß der Strom klein sein. Deshalb ist bei einer Spannungsquelle als Energiequelle eine hohe Spannung, bei einer Stromquelle als Energiequelle ein geringer Strom von Vorteil. Sofern bei Speisung mit einer Stromquelle unterschiedliche Ströme oder Ströme, die größer als der Fernspeisestrom sind, benötigt werden, ist für jeden Verbraucher eine Stromversorgungsschaltung vorzusehen, die den Fernspeisestrom in den Betriebsstrom für den Verbraucher umwandelt.

Die in der angeführten Literaturstelle angegebenen Stromversorgungsschaltungen sind jedoch weniger dafür geeignet, einen von einer Gleichstromquelle gelieferten Strom in einen höheren Strom umzuwandeln, weil in diesem Anwendungsfall bei Verringerung der Last am Ausgang der Eingangswiderstand und damit auch die Eingangsleistung erhöht anstatt verringert werden. Sie weisen deshalb eine relativ hohe Verlustleistung auf.

Aus der JP-A-57 62 780 ist ein Wandler bekannt, bei dem ein geglätteter Strom durch einen zweiten Transistor erzielt wird, der parallel zum Gleichspannungseingang des Wandlers mit Parallelschwing Kreis liegt und im Gegentakt zum Wandler transistor schaltet ; doch weist der Wandler keine Impulsbreitenregelung auf.

Es ist daher Aufgabe der Erfindung, eine Stromversorgungsschaltung anzugeben, die bei Speisung durch eine Gleichstromquelle eine relativ geringe Verlustleistung aufweist.

Die Erfindung löst diese Aufgabe mit den im Kennzeichen des Anspruches 1 stehenden Merkmalen.

In den abhängigen Ansprüchen sind vorteilhafte Ausführungen der Erfindung angegeben.

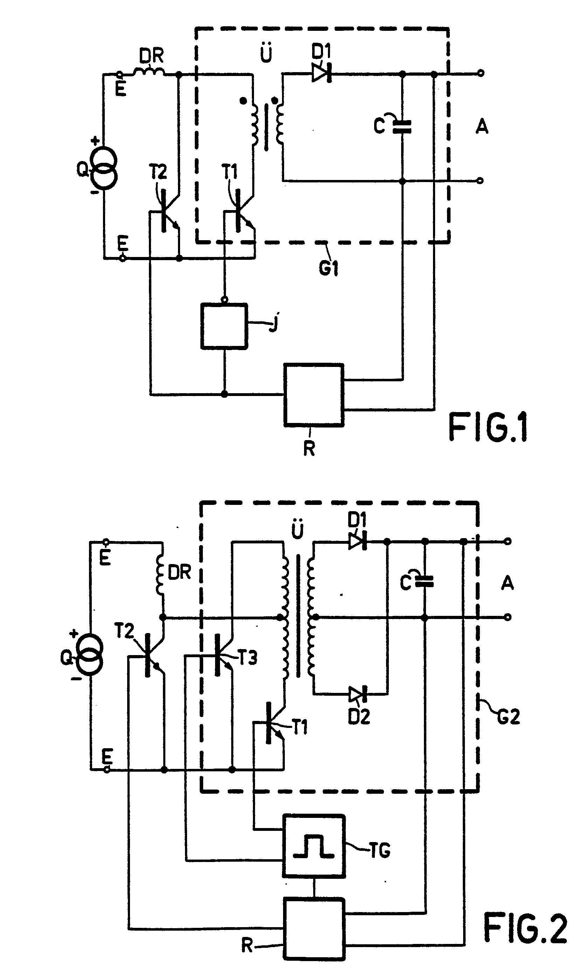

An Hand der in den Fig. 1 und 2 gezeigten Ausführungsbeispiele wird die Erfindung näher erläutert.

Bei dem in der Fig. 1 dargestellten Ausführungsbeispiel ist der Gleichspannungswandler als Eintaktdurchflußwandler G1 ausgebildet. Die Stromquelle Q ist einerseits über eine Drossel DR mit dem Kollektor eines Transistors T2 und andererseits mit dem Emitter des Transistors T2 verbunden. Parallel zur Kollektor-Emitter-Strecke des Transistors T2 leigt eine Reihenschaltung, die aus der Primärwicklung eines Übertragers Ü und der Kollektor-Emitter-Strecke eines Transistors T1 besteht. Die Anschlüsse der Sekundärwicklung des Übertragers Ü sind über eine Reihenschaltung aus einer Diode D1 und einer Kapazität C miteinander verbunden. Parallel zu dieser Kapazität C liegen der Ausgang A der Stromversorgungsschaltung sowie der Eingang des Reglers R, dessen Ausgang sowohl mit der Basis des Transistors T2 als auch über einen Inverter I mit der Basis des Transistors T1 verbunden ist.

Der Übertrager Ü, die Diode D1, die Kapazität C sowie der Transistor T1 bilden einen ungeregelten Eintaktdurchflußwandler ohne Speicherdrossel im Ausgangskreis. Auf seine Wirkungsweise soll an dieser Stelle nicht näher eingegangen werden, denn sie ist bereits in der genannten Literaturstelle ausführlich erläutert.

Mit dem Regler R wird das Tastverhältnis der Rechteckspannung für die Transistoren T1 und T2 verändert. Der Regler R steuert den Transistor T2 unmittelbar und den Transistor T1 über den Inverter I an, so daß beide Transistoren gegenphasig betrieben werden. Während der Transistor T1 leitend ist — der Transistor T2 sperrt dann —, gibt die Stromquelle Q Energie an den Gleichspannungswandler G1 ab. Weil der Transistor T2 während der Sperrphase des Transistors T1 leitend ist, läuft die Stromquelle Q nicht leer, sondern ist, sofern der Leitungswiderstand vernachläßigt wird, kurzgeschlossen. Es dürfen zwar nie beide Transistoren gleichzeitig sperren, wohl aber dürfen sie gleichzeitig leiten. Deshalb kann sich am Eingang der Stromversorgungsschaltung keine hohe Spannung aufbauen, wie es bei Leerlauf der Fall wäre, so daß die Verlustleistung der Stromversorgungsschaltung und damit auch die Belastung der Stromquelle gering bleiben. Zum besseren Verständnis der Funktionsweise der Erfindung sei an dieser Stelle an die unterschiedliche Belastung einer Spannungsquelle und einer Stromquelle sowohl bei Kurzschluß als auch bei Leerlauf erinnert: eine Spannungsquelle wird bei Leerlauf überhaupt nicht, dagegen bei Kurzschluß am stärksten belastet. Bei einer Stromquelle liegt der Fall genau umgekehrt. Eine Stromquelle wird bei hochohmiger Last am stärksten belastet, während sie bei Kurzschluß gar nicht belastet wird.

Die Drossel DR dient dazu, Stromspitzen in den Transistoren T1 und T2 und Spannungssprünge auf der Leitung, die während des Schaltens der beiden Transistoren in Folge parasitärer Leitungskapazitäten auftreten können, zu verhindern. Ohne die Drossel DR wäre die Leitung zur Stromquelle Q deshalb nicht entstört, die Stromquelle Q würde in diesem Fall mit einer nicht rückwirkungsfreien Stromversorgungsschaltung verbunden sein.

In der Fig. 2 ist ein zweites Ausführungsbeispiel der Erfindung gezeigt, dessen Gleichspannungswandler ein Gegentaktdurchflußwandler G2 ist.

Parallel zu den Polen der Gleichstromquelle Q liegt eine Reihenschaltung aus einer Drossel DR und der Kollektor-Emitter-Strecke eines Transistors T2, dessen Emitter mit den Emittern zweier weiterer Transistoren T1 und T3 verbunden ist. Die Kollektoren der beiden Transistoren T1 und T3 sind über die Primärwicklung des Übertragers Ü miteinander verbunden, deren Mittenanzapfung an den Kollektor des Transistors T2 angeschlossen ist. Die Anschlüsse der Sekundärwicklung sind über zwei entgegengesetzt gepolte Dioden D1 und D2 miteinander verbunden. Zwischen dem Verbindungspunkt der beiden Dioden D1 und D2 sowie der Mittenanzapfung der Sekundärwicklung liegt eine Kapazität C, parallel zu ihr liegen der Ausgang A der Stromversorgungsschaltung sowie der Eingang des Reglers R. Die Basis des Transistors T2 ist an den Ausgang des Reglers R angeschlossen. Die Basen der restlichen Transistoren T1 und T3 sind mit einem Taktgenerator TG verbunden, der sie im Gegentakt mit einer Rechteckspannung ansteuert, deren Tastverhältnis 1/2 beträgt. Der Regler R und der Taktgenerator TG sind frequenzsynchronisiert. Der Gegentaktwandler ist aus dem Übertrager Ü, den Transistoren T1 und T3, den Dioden D1 und D2 und der Kapazität C aufgebaut. Seine Funktionsweise ist in der eingangs genannten Literaturstelle beschrieben.

Der Transistor T2 wird vom Regler R impulsbreitengesteuert. Solange er sperrt, fließt von der Stromquelle Q kommend der Fernspeisestrom entweder über den Transistor T1 oder T3 in den Primärkreis des Übertragers Ü, denn die beiden Transistoren T1 und T3 werden im Gegentakt angesteuert, so daß immer einer von ihnen leitend ist. Je länger der Transistor T2 leitend ist, desto geringer ist die Spannung am Eingang E der Stromversorgungsschaltung und damit die Belastung der Stromquelle.

## Patentansprüche

1. Stromversorgungsschaltung mit einem aus einer Konstantstromquelle (E, E) gespeisten Durchflußwandler (G1, G2) als Gleichspannungswandler, der einen Übertrager (Ü) sowie mindestens einen steuerbaren Schalter (T1, T3) aufweist, und mit einem Regler (R) zur Impulsbreitensteuerung, dadurch gekennzeichnet, daß parallel zum Eingang (E) des Gleichspannungswandlers ein weiterer steuerbarer Schalter (T2) liegt, der vom Regler (R) impulsbreitengesteuert wird, und daß die steuerbaren Schalter (T1, T2, T3) so angesteuert werden, daß sie nie alle gleichzeitig geöffnet sind.

2. Stromversorgungsschaltung nach Anspruch 1, dadurch gekennzeichnet, daß der Gleichspannungswandler ein Eintaktdurchflußwandler (G1) ist.

3. Stromversorgungsschaltung nach Anspruch 2, dadurch gekennzeichnet, daß der steuerbare Schalter (T1) des Eintaktdurchflußwandlers (G1) im Gegentakt zum weiteren steuerbaren Schalter (T2) angesteuert wird.

4. Stromversorgungsschaltung nach Anspruch 1, dadurch gekennzeichnet, daß der Gleichspannungswandler ein Gegentaktdurchflußwandler (G2) ist.

5. Stromversorgungsschaltung nach Anspruch 4, dadurch gekennzeichnet, daß die steuerbaren Schalter (T1, T3) des Gegentaktdurchflußwandlers (G2) von einem Taktgenerator (TG) im Gegentakt zueinander und mit der gleichen Frequenz wie der weitere steuerbare Schalter (T2) angesteuert werden.

6. Stromversorgungsschaltung nach Anspruch 1, dadurch gekennzeichnet, daß im Eingangskreis des Gleichspannungswandlers in Serie zur Gleichstromquelle (Q) eine Drossel (DR) liegt.

7. Stromversorgungsschaltung nach einem der vorhergehenden Ansprüche, dadurch gekennzeichnet, daß die steuerbaren Schalter (T1, T2, T3) Transistoren sind.

## Claims

1. A current supply circuit comprising a switched-mode converter (G1, G2) which is fed from a constant-current source (E, E) and is used as a d. c. voltage converter, comprising a transformer (Ü) and also at least one controllable switch (T1, T3), and a controller (R) for pulse width control, characterized in that a further controllable switch (T2) which is pulse-width controlled by the controller (R) is arranged in parallel with the input (E) of the d. c. voltage converter and that the controllable switches (T1, T2, T3) are controlled such that they are never simultaneously conductive.

2. A current supply circuit as claimed in Claim 1, characterized in that the d. c. voltage converter is a single-ended switched-mode converter (G1).

3. A current supply circuit as claimed in Claim 2, characterized in that the controllable switch (T1) of the single-ended switched-mode converter (G1) is controlled in the push-pull mode compared with the further controllable switch (T2).

4. A current supply circuit as claimed in Claim 1, characterized in that the d. c. voltage converter is a push-pull switched-mode converter (G2).

5. A current supply circuit as claimed in Claim 4, characterized in that the controllable switches (T1, T3) of the push-pull switched-mode converter (G2) are controlled by a pulse generator (TG) in the push-pull mode relative to each other and with the same frequency as the further controllable switch (T2).

6. A current supply circuit as claimed in Claim 1, characterized in that a choke (DR) is provided in the input circuit of the d. c. voltage converter in series with the direct current source (Q).

7. A current supply circuit as claimed in any one of the preceding Claims, characterized in that the controllable switches (T1, T2, T3) are transistors.

**Revendications**

1. Circuit d'alimentation en courant électrique comportant un convertisseur de passage (G1, G2) à titre de convertisseur continu-continu alimenté au moyen d'une source de courant constant (E, E) qui comporte un transformateur (Ü) ainsi qu'au moins un commutateur (T1, T3) pouvant être commandé et un régulateur (R) pour piloter la largeur des impulsions, caractérisé en ce que parallèlement à l'entrée (E) du convertisseur continu-continu est prévu un autre commutateur pouvant être commandé (T2) qui est piloté par le régulateur (R) agissant sur la largeur d'impulsions et les commutateurs pouvant être commandés (T1, T2, T3) sont pilotés de telle façon qu'ils ne soient jamais ouverts tous en même temps.

2. Circuit d'alimentation en courant électrique suivant la revendication 1, caractérisé en ce que le convertisseur continu-continu est un convertisseur de passage monophasé (G1).

3. Circuit d'alimentation en courant électrique suivant la revendication 2, caractérisé en ce que le commutateur pouvant être commandé (T1) du convertisseur de passage monophasé (G1) est piloté en push-pull par rapport à l'autre commutateur pouvant être commandé (T2).

4. Circuit d'alimentation en courant électrique suivant la revendication 1, caractérisé en ce que le convertisseur continu-continu est un convertisseur de passage en push-pull (G2).

5. Circuit d'alimentation en courant électrique suivant la revendication 4, caractérisé en ce que les commutateurs pouvant être commandés (T1, T3) du convertisseur de passage en push-pull (G2) sont pilotés par un générateur d'horloge (TG) en push-pull l'un par rapport à l'autre et à la même fréquence que l'autre commutateur pouvant être commandé (T2).

6. Circuit d'alimentation en courant électrique suivant la revendication 1, caractérisé en ce que dans le circuit d'entrée du convertisseur continu-continu, une bobine d'arrêt (DR) est prévue en série avec la source de courant continu (Q).

7. Circuit d'alimentation en courant électrique suivant l'une quelconque des revendications précédentes, caractérisé en ce que les commutateurs pouvant être commandés (T1, T2, T3) sont des transistors.

FIG.1

FIG.2

1